# EUROPÄISCHE PATENTANMELDUNG

(11) **EP 3 273 211 A2**
(43) Veröffentlichungstag der Anmeldung: **24.01.2018**
(21) Anmeldenummer: 17179948.9
(22) Anmeldetag: 06.07.2017
(51) Int. Cl.: G01J 5/02, G01J 5/04, G01K 1/02, G01J 5/08

(54) **IR-SENSORVORRICHTUNG ZUR MESSUNG EINER GARGUTTEMPERATUR**

(30) Priorität: 21.07.2016 ES 201630996
(71) Anmelder: BSH Hausgeräte GmbH, 81739 München (DE)
(72) Erfinder: Llorente Gil, Sergio, 50009 Zaragoza (ES); Mir Bel, Jorge, 50019 Zaragoza (ES); Rivera Peman, Julio, 50410 Cuarte de Huerva (Zaragoza) (ES)

(57) **Zusammenfassung**

Die Erfindung geht aus von einer Sensorvorrichtung (10a-b) mit einer Sensoreinheit (12a-b), welche zu einer Detektion von Infrarot-Strahlung vorgesehen ist.

Um eine gattungsgemäße Vorrichtung mit verbesserten Eigenschaften hinsichtlich einer hohen Zuverlässigkeit bereitzustellen, wird vorgeschlagen, dass die Sensoreinheit (12a-b) zumindest einen Messpunkt (14a-b) aufweist, welcher zu einer Einbringung in zumindest ein Gargut (16a-b) vorgesehen ist.

## Beschreibung

Die Erfindung betrifft eine Sensorvorrichtung nach dem Oberbegriff des Patentanspruchs 1 und ein Verfahren zu einer Messung zumindest einer Temperatur zumindest eines Garguts nach dem Patentanspruch 11.

Aus dem Stand der Technik ist bereits eine Sensorvorrichtung mit einer Sensoreinheit bekannt. Die Sensoreinheit detektiert in einem Betriebszustand Infrarot-Strahlung, welche in dem Betriebszustand von einem Gargut ausgeht. Messpunkte der Sensoreinheit sind außerhalb des Garguts angeordnet.

Die Aufgabe der Erfindung besteht insbesondere darin, eine gattungsgemäße Vorrichtung mit verbesserten Eigenschaften hinsichtlich einer hohen Zuverlässigkeit bereitzustellen. Die Aufgabe wird erfindungsgemäß durch die Merkmale der Patentansprüche 1 und 11 gelöst, während vorteilhafte Ausgestaltungen und Weiterbildungen der Erfindung den Unteransprüchen entnommen werden können.

Die Erfindung geht aus von einer Sensorvorrichtung mit einer Sensoreinheit, welche zu einer Detektion von Infrarot-Strahlung insbesondere ausgehend von zumindest einem Gargut vorgesehen ist.

Es wird vorgeschlagen, dass die Sensoreinheit zumindest einen Messpunkt aufweist, welcher zu einer insbesondere reversiblen Einbringung in zumindest ein Gargut vorgesehen ist. Unter einer "Sensorvorrichtung" soll insbesondere eine Vorrichtung verstanden werden, welche in wenigstens einem Betriebszustand zu einer Verwendung in einem Garprozess vorgesehen ist, welcher insbesondere durch zumindest ein Heizelement zumindest eines Gargeräts hervorgerufen und/oder verursacht ist und welche insbesondere dazu vorgesehen ist, in dem Garprozess zumindest eine Sensorkenngröße zu detektieren. Die Sensorvorrichtung könnte insbesondere als eine Zubehörvorrichtung für das Gargerät ausgebildet sein und insbesondere zu einer Nachrüstung des Gargeräts vorgesehen sein. Alternativ könnte das Gargerät die Sensorvorrichtung umfassen, wobei das Gargerät und die Sensorvorrichtung gemeinsam vertrieben werden könnten. Unter einer "Sensoreinheit" soll insbesondere zumindest eine Einheit verstanden werden, welche zumindest einen Detektor zu einer Detektion wenigstens einer Sensorkenngröße aufweist und welche dazu vorgesehen ist, einen die Sensorkenngröße kennzeichnenden Wert auszugeben, wobei es sich bei der Sensorkenngröße vorteilhaft um eine physikalische und/oder chemische Größe handelt. Unter "Infrarot-Strahlung" soll insbesondere elektromagnetische Strahlung aus einem Wellenlängenbereich von 780 nm bis 0,3 mm verstanden werden. Unter einem "Messpunkt" soll insbesondere ein räumlicher Oberflächenbereich der Sensoreinheit verstanden werden, über welchen in wenigstens einem Betriebszustand Infrarot-Strahlung zur Detektion eintritt und welcher insbesondere zu einer Aufnahme und/oder zu einer Detektion von Infrarot-Strahlung vorgesehen ist. In wenigstens einem Betriebszustand ist der Messpunkt insbesondere innerhalb des Garguts angeordnet. Außerhalb eines Betriebszustands könnte der Messpunkt insbesondere außerhalb des Garguts angeordnet sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine hohe Zuverlässigkeit erreicht werden. Insbesondere kann eine hohe Messgenauigkeit erzielt werden. Die Detektion von Infrarot-Strahlung kann besonders vorteilhaft an kritischen Stellen des Garguts erfolgen, welche insbesondere eine besonders lange Garzeit benötigen, wodurch insbesondere optimale Garergebnisse erzielt werden können. Insbesondere kann ein geringer Aufwand zu einer Entwicklung der Sensorvorrichtung erzielt werden. Mit der Sensorvorrichtung kann einem Kunden und/oder Bediener insbesondere ein neues Feature angeboten werden, wodurch insbesondere ein hoher Komfort für den Kunden und/oder Bediener und/oder ein Vorsprung gegenüber Konkurrenten ermöglicht werden kann.

Ferner wird vorgeschlagen, dass die Sensoreinheit zumindest einen Wellenleiter aufweist, welcher Infrarot-Strahlung von dem Messpunkt in wenigstens einem Betriebszustand aus dem Gargut heraus transportiert. Insbesondere könnte der Wellenleiter in wenigstens einem montierten Zustand den Messpunkt und zumindest einen Detektor der Sensoreinheit wenigstens im Wesentlichen miteinander verbinden. Unter einem "Wellenleiter" soll insbesondere ein Element verstanden werden, welches in wenigstens einem Betriebszustand Infrarot-Strahlung in Längsrichtung des Wellenleiters transmittiert, insbesondere transportiert, insbesondere über Totalreflexionen innerhalb des Wellenleiters. Insbesondere verhindert der Wellenleiter in wenigstens einem Betriebszustand zumindest ein Austreten zumindest von Infrarot-Strahlung in zumindest im Wesentlichen senkrecht zu der Längsrichtung ausgerichteten Richtungen wenigstens im Wesentlichen. Dadurch kann insbesondere auf eine Einbringung zumindest eines Detektors und/oder zumindest einer elektrischen und/oder elektronischen Komponente innerhalb des Garguts verzichtet werden.

Der Wellenleiter könnte beispielsweise wenigstens im Wesentlichen starr ausgebildet sein. Insbesondere könnte der Wellenleiter zu einer Einbringung in das Gargut vorgesehen sein, und zwar insbesondere unter Vermeidung einer Umhüllung des Wellenleiters. Vorzugsweise weist die Sensoreinheit zumindest ein wenigstens im Wesentlichen starres Einführungselement auf, innerhalb welchem der Wellenleiter in wenigstens einem montierten Zustand wenigstens teilweise, und insbesondere wenigstens zu einem Großteil, angeordnet ist. Das Einführungselement ist insbesondere zu einer teilweisen Einbringung in das Gargut vorgesehen. Insbesondere umgibt, vorteilhaft umschließt, das Einführungselement den Wellenleiter in wenigstens einem montierten Zustand über wenigstens einen Großteil einer Längserstreckung des Wellenleiters. Unter einer "Längserstreckung" eines Objekts soll insbesondere eine Erstreckung des Objekts entlang einer Längserstreckungsrichtung des Objekts verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden. Das Einführungselement besteht insbesondere wenigstens zu einem Großteil aus zumindest einem wenigstens im Wesentlichen starren Material. Beispielsweise könnte das Einführungselement wenigstens zu einem Großteil aus zumindest einer Keramik bestehen, welche insbesondere eine hohe Widerstandsfähigkeit gegenüber mechanischem Stress aufweisen könnte. Alternativ oder zusätzlich könnte das Einführungselement wenigstens zu einem Großteil aus zumindest einem Metall bestehen, wie beispielsweise aus Aluminium und/oder aus Edelstahl. Unter "starr" soll insbesondere unbeweglich und/oder inflexibel und/oder hart und/oder unbiegsam und/oder steif verstanden werden. Unter der Wendung, dass der Wellenleiter in wenigstens einem montierten Zustand "wenigstens teilweise" innerhalb des Einführungselements angeordnet ist, soll insbesondere verstanden werden, dass der Wellenleiter in wenigstens einem montierten Zustand zu einem Massenanteil und/oder Volumenanteil von mindestens 30 %, insbesondere zu mindestens 40 %, vorteilhaft zu mindestens 50 % und vorzugsweise zu mindestens 60 % innerhalb des Einführungselements angeordnet sein kann. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Dadurch kann der Wellenleiter insbesondere besonders geschützt angeordnet werden. Das wenigstens im Wesentlichen starre Einführungselement kann insbesondere problemlos in das Gargut eingeführt werden.

Beispielsweise könnte das Einführungselement genau eine Detektionsausnehmung aufweisen, welche insbesondere den Messpunkt definieren könnte. Vorzugsweise weist das Einführungselement zumindest zwei, insbesondere zumindest drei, vorteilhaft zumindest vier und vorzugsweise zumindest fünf Detektionsausnehmungen auf, die den Messpunkt und zumindest einen weiteren Messpunkt, insbesondere zumindest zwei, vorteilhaft zumindest drei und vorzugsweise zumindest vier weitere Messpunkte definieren. Insbesondere weist die Sensoreinheit zumindest einen und vorteilhaft den weiteren Messpunkt auf. Dadurch kann insbesondere ein großer Messbereich zur Verfügung gestellt werden, wodurch insbesondere eine hohe Detektionsgenauigkeit ermöglicht werden kann.

Ferner wird vorgeschlagen, dass die Sensorvorrichtung zumindest ein Kontaktmodul aufweist, das zu einer abnehmbaren Anordnung an zumindest einem Gargeschirr vorgesehen ist. In wenigstens einem montierten Zustand ist das Kontaktmodul vorzugsweise zu einer kraftschlüssigen und/oder formschlüssigen Verbindung mit dem Gargeschirr vorgesehen. Beispielsweise könnte das Kontaktmodul zu einer durch Unterdruck, beispielsweise mittels eines Saugknopfes, hervorgerufenen Verbindung mit dem Gargeschirr vorgesehen sein. Vorteilhaft ist das Kontaktmodul zu einer magnetischen Verbindung mit dem Gargeschirr vorgesehen. Das Kontaktmodul könnte beispielsweise zu einer Anordnung an einem Deckel und/oder vorteilhaft an einer Seitenwand des Gargeschirrs vorgesehen sein. Beispielsweise könnte das Kontaktmodul zumindest eine Kontaktmodul-Sensoreinheit aufweisen, welche zu einer Detektion von Infrarot-Strahlung, insbesondere des Gargeschirrs, vorgesehen sein könnte. Das Kontaktmodul könnte beispielsweise zumindest eine Kontaktmodul-Steuereinheit aufweisen, welche insbesondere in wenigstens einem Betriebszustand mit der Kontaktmodul-Sensoreinheit kommunizieren und auf Basis der von der Kontaktmodul-Sensoreinheit detektierten Infrarot-Strahlung zumindest eine Temperatur des Gargeschirrs ermitteln könnte. Dadurch kann insbesondere eine hohe Flexibilität erreicht werden.

Zudem wird vorgeschlagen, dass die Sensorvorrichtung zumindest eine Steuereinheit aufweist, die in wenigstens einem Betriebszustand mit der Sensoreinheit kommuniziert und auf Basis der von der Sensoreinheit detektierten Infrarot-Strahlung zumindest eine Temperatur des Garguts ermittelt. Insbesondere weist die Steuereinheit zumindest eine Kommunikationseinheit auf. Insbesondere weist die Sensoreinheit zumindest eine Kommunikationseinheit auf. Die Kommunikationseinheit der Steuereinheit und die Kommunikationseinheit der Sensoreinheit tauschen in wenigstens einem Betriebszustand insbesondere Informationen untereinander aus. Unter einer "Kommunikationseinheit" soll insbesondere eine Einheit verstanden werden, welche zumindest ein Sendemodul, welches zu einem Versenden von Informationen vorgesehen ist, und/oder zumindest ein Empfangsmodul, welches zu einem Empfang von Informationen vorgesehen ist, aufweist. Unter einer "Steuereinheit" soll insbesondere eine elektronische Einheit verstanden werden, die vorzugsweise in einer Steuer- und/oder Regeleinheit eines Gargeräts zumindest teilweise integriert ist und die vorzugsweise dazu vorgesehen ist, zumindest ein Heizelement zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Steuereinheit könnte die Temperatur des Garguts insbesondere auf Basis der von der Sensoreinheit detektierten Infrarot-Strahlung berechnen. Alternativ oder zusätzlich könnte die Steuereinheit die Temperatur des Garguts insbesondere durch Vergleich der von der Sensoreinheit detektierten Infrarot-Strahlung mit zumindest einem hinterlegten Datensatz ausfindig machen, welcher insbesondere bestimmten Werten von Infrarot-Strahlung jeweils zumindest eine Temperatur zuweisen könnte. Dadurch kann insbesondere eine schnelle und/oder unkomplizierte Auswertung der von der Sensoreinheit detektierten Infrarot-Strahlung erfolgen.

Beispielsweise könnten das Kontaktmodul und die Sensoreinheit, insbesondere das Kontaktmodul und das Einführungselement der Sensoreinheit, in wenigstens einem montierten Zustand wenigstens im Wesentlichen starr miteinander verbunden sein. Das Kontaktmodul könnte insbesondere zumindest eine Kommunikationseinheit aufweisen, welche zu einer Kommunikation mit der Steuereinheit vorgesehen sein könnte. Die Steuereinheit könnte insbesondere in zumindest einem Gargerät und/oder in zumindest einer Gargeräte-Steuereinheit integriert sein und in wenigstens einem Betriebszustand in Abhängigkeit der von der Kommunikationseinheit empfangenen Informationen zumindest eine Temperatur des Garguts ermitteln. Vorzugsweise ist die Steuereinheit wenigstens im Wesentlichen in dem Kontaktmodul integriert. Insbesondere existiert zumindest eine insbesondere beliebige Querschnittsebene, in welcher die Steuereinheit insbesondere bezüglich eines geometrischen Schwerpunkts und/oder Mittelpunkts der Steuereinheit von dem Kontaktmodul umgeben ist. Beispielsweise könnten die Steuereinheit und die Kontaktmodul-Steuereinheit wenigstens im Wesentlichen identisch sein. Dadurch kann eine in dem Kontaktmodul integrierte Elektronik insbesondere mehrere Funktionen übernehmen, und zwar insbesondere eine Ermittlung einer Temperatur des Gargeschirrs und eine Ermittlung einer Temperatur des in dem Gargeschirr angeordneten Garguts.

Ferner wird vorgeschlagen, dass das Kontaktmodul und die Sensoreinheit, insbesondere das Kontaktmodul und das Einführungselement der Sensoreinheit, in wenigstens einem montierten Zustand wenigstens im Wesentlichen starr miteinander verbunden sind. Dadurch kann insbesondere eine besonders hohe Stabilität und/oder eine kompakte Ausgestaltung erzielt werden.

Beispielsweise könnte zumindest ein Detektor der Sensoreinheit wenigstens im Wesentlichen in dem Kontaktmodul integriert sein, welches insbesondere in wenigstens einem Betriebszustand an dem Gargeschirr angeordnet sein könnte. Der Wellenleiter könnte beispielsweise die an dem Messpunkt aufgenommene Infrarot-Strahlung von dem Messpunkt zu dem insbesondere in dem Kontaktmodul integrierten Detektor der Sensoreinheit transportieren und insbesondere das Einführungselement und den Detektor der Sensoreinheit wenigstens im Wesentlichen miteinander verbinden und insbesondere als ein flexibles Verbindungselement ausgebildet sein. Vorzugsweise sind das Kontaktmodul und die Sensoreinheit, insbesondere das Kontaktmodul und das Einführungselement der Sensoreinheit, in wenigstens einem montierten Zustand durch ein wenigstens im Wesentlichen flexibles Verbindungselement der Sensoreinheit miteinander verbunden. Insbesondere könnte das flexible Verbindungselement zumindest ein elektrisches Kabel umfassen und insbesondere zumindest zu einer elektrischen Verbindung zwischen dem Kontaktmodul und der Sensoreinheit vorgesehen sein. Alternativ oder zusätzlich könnte der Wellenleiter wenigstens teilweise innerhalb des Verbindungselements angeordnet und insbesondere dazu vorgesehen sein, die von der Sensoreinheit detektierte Infrarot-Strahlung zu dem Kontaktmodul und/oder zu der in dem Kontaktmodul integrierten Steuereinheit und/oder zu einem in dem Kontaktmodul integrierten Detektor der Sensoreinheit zu leiten. Beispielsweise könnten die Kommunikationseinheit der Sensoreinheit und die Kommunikationseinheit der Steuereinheit, insbesondere im Fall einer in dem Kontaktmodul integrierten Steuereinheit, in wenigstens einem Betriebszustand über das Verbindungselement miteinander kommunizieren. Alternativ oder zusätzlich könnten die Kommunikationseinheit der Sensoreinheit und die Kommunikationseinheit der Steuereinheit in wenigstens einem Betriebszustand drahtlos miteinander kommunizieren, wie insbesondere mittels Bluetooth und/oder mittels Infrarot-Strahlung. Dadurch kann die Sensoreinheit insbesondere bei Aufrechterhaltung einer Verbindung mit dem Kontaktmodul flexibel relativ zu dem Kontaktmodul bewegt werden, wodurch das Einführungselement insbesondere flexibel und vorteilhaft an verschiedenen Stellen wenigstens teilweise in ein Gargut eingebracht werden kann.

Eine besonders hohe Detektionsgenauigkeit kann insbesondere erreicht werden durch ein Gargerät, insbesondere durch ein Kochfeld und vorteilhaft durch ein Induktionskochfeld, mit zumindest einer erfindungsgemäßen Sensorvorrichtung.

Die Detektionsgenauigkeit kann insbesondere weiter gesteigert werden durch ein Verfahren zur Messung zumindest einer Temperatur zumindest eines Garguts, insbesondere mit einer erfindungsgemäßen Sensorvorrichtung, bei welchem Infrarot-Strahlung innerhalb des Garguts detektiert wird.

Die Sensorvorrichtung soll hierbei nicht auf die oben beschriebene Anwendung und Ausführungsform beschränkt sein. Insbesondere kann die Sensorvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gargerät mit einer Sensorvorrichtung in einer schematischen Draufsicht,
- Fig. 2: eine Sensoreinheit, eine Steuereinheit und ein Kontaktmodul der Sensorvorrichtung in einer schematischen teilweisen Schnittdarstellung,
- Fig. 3: ein Gargeschirr, ein Gargut, die Sensoreinheit, die Steuereinheit und das Kontaktmodul in einer schematischen Darstellung und
- Fig. 4: eine Sensoreinheit, eine Steuereinheit und ein Kontaktmodul einer alternativen Sensorvorrichtung und ein Gargeschirr und ein Gargut in einer schematischen Darstellung.

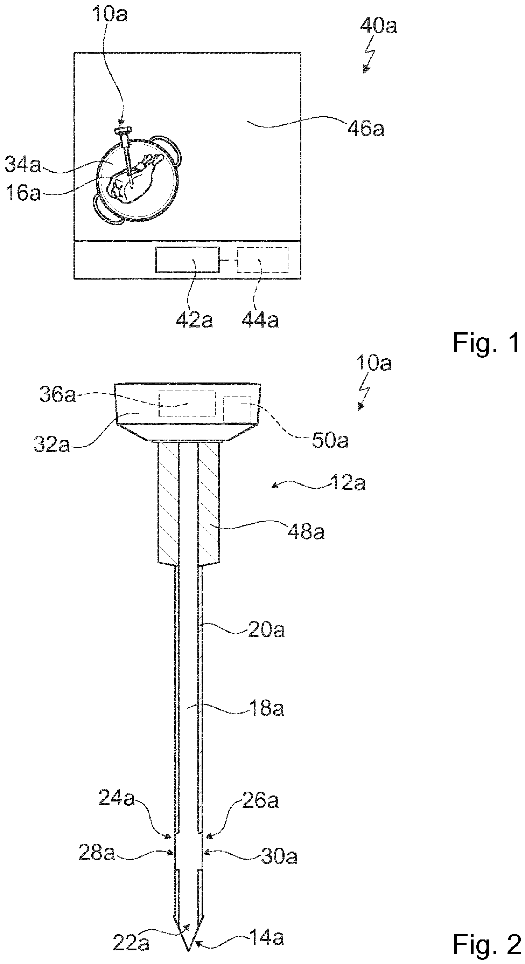

Fig. 1 zeigt ein Gargerät 40a, das als ein Kochfeld ausgebildet ist. Im vorliegenden Ausführungsbeispiel ist das Gargerät 40a als ein Induktionskochfeld ausgebildet. Das Gargerät könnte alternativ als ein Backofen, insbesondere als ein Induktionsbackofen, und/oder als ein Mikrowellengerät und/oder als ein Herd und/oder als ein Dampfgargerät ausgebildet sein.

Das Gargerät 40a weist eine Gargeräte-Bedienerschnittstelle 42a zu einer Eingabe und/oder Auswahl von Betriebsparametern auf, beispielsweise einer Heizleistung und/oder einer Heizleistungsdichte und/oder einer Heizzone. Die Gargeräte-Bedienerschnittstelle 42a ist zu einer Ausgabe eines Werts eines Betriebsparameters an einen Bediener vorgesehen.

Das Gargerät 40a weist eine Gargeräte-Steuereinheit 44a auf. Die Gargeräte-Steuereinheit 44a ist dazu vorgesehen, in Abhängigkeit von mittels der Gargeräte-Bedienerschnittstelle 42a eingegebenen Betriebsparametern Aktionen auszuführen und/oder Einstellungen zu verändern. Die Gargeräte-Steuereinheit 44a regelt in einem Heizbetriebszustand eine Energiezufuhr zu Heizelementen (nicht dargestellt).

Das Gargerät 40a weist mehrere Heizelemente auf. Beispielsweise könnten die Heizelemente in Form einer Matrix angeordnet sein. Die Heizelemente könnten insbesondere Teil zumindest eines variablen Kochflächenbereichs sein. Alternativ könnten die Heizelemente insbesondere Teil eines klassischen Kochfelds sein, bei welchem insbesondere durch eine Position der Heizelemente definierte, fest vorgegebene Heizzonen existieren könnten, welche insbesondere auf einer Gargeräteplatte markiert sein könnten.

Die Heizelemente sind dazu vorgesehen, auf einer Gargeräteplatte 46a oberhalb der Heizelemente aufgestelltes Gargeschirr 34a zu erhitzen. Die Heizelemente sind als Induktionsheizeinheiten ausgebildet. In einer Einbaulage sind die Heizelemente in einer Vertikalrichtung unterhalb der Gargeräteplatte 46a angeordnet.

Das Gargerät 40a weist die Gargeräteplatte 46a auf. Die Gargeräteplatte 46a ist zu einem Aufstellen von Gargeschirr 34a zu einer Beheizung vorgesehen. In einem montierten Zustand bildet die Gargeräteplatte 46a einen Teil eines Gargeräteaußengehäuses aus. Im vorliegenden Ausführungsbeispiel ist die Gargeräteplatte 46a als eine Kochfeldplatte ausgebildet.

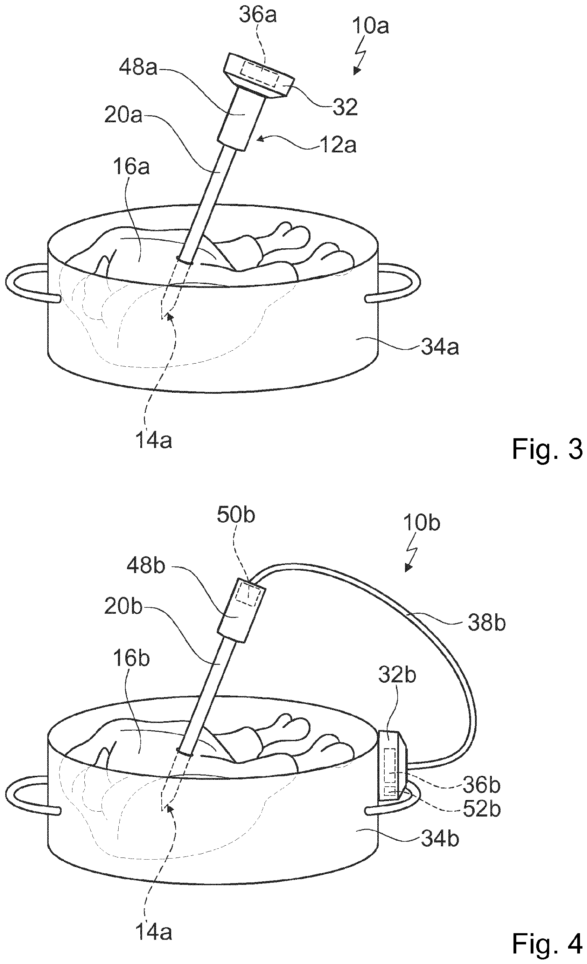

Das Gargerät 40a weist die Sensorvorrichtung 10a auf (vgl. Fig. 2 und 3). Die Sensorvorrichtung 10a weist eine Sensoreinheit 12a auf, welche zu einer Detektion von Infrarot-Strahlung vorgesehen ist.

Die Sensoreinheit 12a weist einen Messpunkt 14a auf. Der Messpunkt 14a ist zu einer Einbringung in ein Gargut 16a vorgesehen. Im vorliegenden Ausführungsbeispiel umfasst das Gargut 16a ein Fleisch, insbesondere ein Geflügel. Alternativ könnte das Gargut 16a eine Flüssigkeit und/oder eine Beilage und/oder einen Auflauf und/oder ein Gebäck und/oder ein Brot und/oder einen Kuchen umfassen.

In einem Betriebszustand ist der Messpunkt 14a innerhalb des Garguts 16a angeordnet. Die Sensoreinheit 12a weist einen Wellenleiter 18a auf. In einem Betriebszustand transportiert der Wellenleiter 18a Infrarot-Strahlung von dem Messpunkt 14a aus dem Gargut 16a heraus. Der Wellenleiter 18a ist in einem Betriebszustand teilweise innerhalb des Garguts 16a angeordnet.

Die Sensoreinheit 12a weist ein im Wesentlichen starres Einführungselement 20a auf. Das Einführungselement 20a ist zu einer teilweisen Einbringung in ein Gargut 16a und insbesondere in das Gargut 16a vorgesehen. Der Wellenleiter 18a ist in einem montierten Zustand zu einem Großteil innerhalb des Einführungselements 20a angeordnet.

Das Einführungselement 20a weist im vorliegenden Ausführungsbeispiel fünf Detektionsausnehmungen 22a, 24a, 26a auf. Von den Detektionsausnehmungen 22a, 24a, 26a sind in den Figuren lediglich drei dargestellt. Die Detektionsausnehmungen 22a, 24a, 26a sind in einem Betriebszustand innerhalb des Garguts 16a angeordnet. In einem montierten Zustand sind die Detektionsausnehmungen 22a, 24a, 26a in einem ersten Endbereich des Einführungselements 20a angeordnet.

Die Detektionsausnehmungen 22a, 24a, 26a definieren den Messpunkt 14a und vier weitere Messpunkte 28a, 30a der Sensoreinheit 12a. Von den weiteren Messpunkten 28a, 30a sind in den Figuren lediglich zwei dargestellt. In einem Betriebszustand tritt durch die Detektionsausnehmungen 22a, 24a, 26a über den Messpunkt 14a und die weiteren Messpunkte 28a, 30a Infrarot-Strahlung in den Wellenleiter 18a ein.

Das Einführungselement 20a weist zumindest einen Handgriff 48a auf. Beispielsweise könnte das Einführungselement 20a mehrere Handgriffe 48a aufweisen. Im vorliegenden Ausführungsbeispiel weist das Einführungselement 20a genau einen Handgriff 48a auf. Der Handgriff 48a ist zu einer Betätigung der Sensoreinheit 12a und/oder des Einführungselements 20a vorgesehen.

Der Handgriff 48a ist in einem montierten Zustand an einem zweiten Endbereich des Einführungselements 20a angeordnet. Der erste Endbereich des Einführungselements 20a und der zweite Endbereich des Einführungselements 20a sind einander in einer Längserstreckungsrichtung des Einführungselements 20a gegenüberliegend angeordnet. In einem Betriebszustand ist der zweite Endbereich des Einführungselements 20a außerhalb des Garguts 16a angeordnet.

Die Sensorvorrichtung 10a weist ein Kontaktmodul 32a auf. Das Kontaktmodul 32a ist zu einer abnehmbaren Anordnung an einem Gargeschirr 34a vorgesehen. Im vorliegenden Ausführungsbeispiel könnte das Kontaktmodul 32a beispielsweise mittels einer magnetischen Verbindung an dem Gargeschirr 34a angeordnet werden.

Das Kontaktmodul könnte beispielsweise zu einer abnehmbaren Anordnung an der Sensoreinheit, insbesondere an dem Einführungselement der Sensoreinheit, vorgesehen sein. Beispielsweise könnte das Kontaktmodul in wenigstens einem montierten Zustand kraftschlüssig und/oder formschlüssig mit der Sensoreinheit, insbesondere mit dem Einführungselement der Sensoreinheit, verbunden und/oder an der Sensoreinheit, insbesondere an dem Einführungselement der Sensoreinheit, angeordnet sein. Beispielsweise könnte das Kontaktmodul in wenigstens einem montierten Zustand mittels einer magnetischen Verbindung mit der Sensoreinheit, insbesondere mit dem Einführungselement der Sensoreinheit, verbunden und/oder an der Sensoreinheit, insbesondere an dem Einführungselement der Sensoreinheit, angeordnet sein. Das Kontaktmodul könnte beispielsweise ein Gewinde aufweisen, welches in wenigstens einem montierten Zustand mit einem korrespondierenden Gewinde der Sensoreinheit verbunden sein könnte. Alternativ oder zusätzlich könnte das Kontaktmodul in wenigstens einem montierten Zustand insbesondere stoffschlüssig, wie beispielsweise einstückig, mit der Sensoreinheit, insbesondere mit dem Einführungselement der Sensoreinheit, verbunden und/oder an der Sensoreinheit, insbesondere an dem Einführungselement der Sensoreinheit, angeordnet sein.

In einem montierten Zustand ist das Kontaktmodul 32a an der Sensoreinheit 12a, insbesondere an dem Einführungselement 20a der Sensoreinheit 12a, angeordnet. Im vorliegenden Ausführungsbeispiel sind das Kontaktmodul 32a und die Sensoreinheit 12a, insbesondere das Kontaktmodul 32a und das Einführungselement 20a der Sensoreinheit 12a, im Wesentlichen starr miteinander verbunden.

Die Sensorvorrichtung 10a weist eine Steuereinheit 36a auf. Im vorliegenden Ausführungsbeispiel ist die Steuereinheit 36a im Wesentlichen in dem Kontaktmodul 32a integriert. Die Steuereinheit 36a ist in einem montierten Zustand in dem an der Sensoreinheit 12a angeordneten Kontaktmodul 32a integriert.

In einem Betriebszustand kommuniziert die Steuereinheit 36a mit der Sensoreinheit 12a. Im vorliegenden Ausführungsbeispiel leitet der Wellenleiter 18a die von der Sensoreinheit 12a detektierte Infrarot-Strahlung aus dem Gargut 16a heraus zu einem Detektor 50a der Sensoreinheit 12a. In einem montierten Zustand ist der Detektor 50a der Sensoreinheit 12a in dem Kontaktmodul 32a integriert.

Alternativ könnte der Wellenleiter die von der Sensoreinheit detektierte Infrarot-Strahlung insbesondere aus dem Gargut heraus zu einem Detektor der Sensoreinheit leiten, welcher beispielsweise in dem Handgriff integriert sein könnte. Eine Kommunikationseinheit der Sensoreinheit könnte insbesondere in dem Handgriff integriert und insbesondere zu einer Kommunikation mit einer Kommunikationseinheit der Steuereinheit vorgesehen sein.

Auf Basis der von der Sensoreinheit 12a detektierten Infrarot-Strahlung ermittelt die Steuereinheit 36a in einem Betriebszustand eine Temperatur des Garguts 16a. Die Steuereinheit 36a gibt die ermittelte Temperatur des Garguts 16a in einem Betriebszustand über eine Bedienerschnittstelle des Kontaktmoduls 32 aus. Alternativ könnte die Steuereinheit insbesondere die ermittelte Temperatur des Garguts in einem Betriebszustand über die Gargeräte-Bedienerschnittstelle ausgeben.

In einem Verfahren zur Messung einer Temperatur des Garguts 16a wird in einem Betriebszustand Infrarot-Strahlung innerhalb des Garguts 16a detektiert. Auf Basis der innerhalb des Garguts 16a detektierten Infrarot-Strahlung wird in einem Betriebszustand die Temperatur des Garguts 16a ermittelt und insbesondere an einen Bediener ausgegeben.

In Fig. 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 3 verwiesen werden kann. Zur Unterscheidung der Ausführungsbeispiele ist der Buchstabe a in den Bezugszeichen des Ausführungsbeispiels in den Fig. 1 bis 3 durch den Buchstaben b in den Bezugszeichen des Ausführungsbeispiels der Fig. 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 3 verwiesen werden.

Fig. 4 zeigt eine Sensoreinheit 12b, eine Steuereinheit 36b und ein Kontaktmodul 32b einer alternativen Sensorvorrichtung 10b. Die Steuereinheit 36b ist im Wesentlichen in dem Kontaktmodul 32b integriert. In einem Betriebszustand ist das Kontaktmodul 32b und insbesondere die in dem Kontaktmodul 32b im Wesentlichen integrierte Steuereinheit 36b an einem Gargeschirr 34b angeordnet.

Ein Einführungselement 20b der Sensoreinheit 12b ist in einem Betriebszustand teilweise innerhalb eines Garguts 16b angeordnet, welches insbesondere zu einem Großteil innerhalb des Gargeschirrs 34b angeordnet ist. In einem Betriebszustand detektiert die Sensoreinheit 12b innerhalb des Garguts 16b emittierte Infrarot-Strahlung.

Ein Wellenleiter 18b der Sensoreinheit 12b leitet die von der Sensoreinheit 12b detektierte Infrarot-Strahlung aus dem Gargut 16b heraus zu einem Detektor 50b der Sensoreinheit 12b. Die Sensoreinheit 12b weist den Detektor 50b auf. Der Detektor 50b ist in einem montierten Zustand in einem Handgriff 48b der Sensoreinheit 12b integriert.

Die Sensoreinheit 12b weist ein im Wesentlichen flexibles Verbindungselement 38b auf. In einem montierten Zustand verbindet das Verbindungselement 38b den Detektor 50b und die Steuereinheit 36b miteinander. Das Kontaktmodul 32b und die Sensoreinheit 12b, insbesondere das Kontaktmodul 32b und das Einführungselement 20b der Sensoreinheit 12b, sind in einem montierten Zustand durch das Verbindungselement 38b der Sensoreinheit 12b miteinander verbunden.

Das Kontaktmodul 32b weist eine Kontaktmodul-Sensoreinheit 52b auf. Die Kontaktmodul-Sensoreinheit 52b detektiert in einem Betriebszustand von dem Gargeschirr 34b emittierte Infrarot-Strahlung. Die Steuereinheit 36b kommuniziert in einem Betriebszustand mit der Kontaktmodul-Sensoreinheit 52b.

In einem Betriebszustand ermittelt die Steuereinheit 36b die Temperatur des Garguts 16b auf Basis der von der Sensoreinheit 12b detektierten Infrarot-Strahlung. Die Steuereinheit 36b ermittelt in einem Betriebszustand eine Temperatur des Gargeschirrs 34b auf Basis der von der Kontaktmodul-Sensoreinheit 52b detektierten Infrarot-Strahlung.

### Bezugszeichen

- 10: Sensorvorrichtung
- 12: Sensoreinheit
- 14: Messpunkt
- 16: Gargut
- 18: Wellenleiter
- 20: Einführungselement
- 22: Detektionsausnehmung
- 24: Detektionsausnehmung
- 26: Detektionsausnehmung
- 28: Weiterer Messpunkt
- 30: Weiterer Messpunkt
- 32: Kontaktmodul
- 34: Gargeschirr
- 36: Steuereinheit
- 38: Verbindungselement
- 40: Gargerät
- 42: Gargeräte-Bedienerschnittstelle
- 44: Gargeräte-Steuereinheit
- 46: Gargeräteplatte
- 48: Handgriff
- 50: Detektor
- 52: Kontaktmodul-Sensoreinheit

## Patentansprüche

1. Sensorvorrichtung (10a-b) mit einer Sensoreinheit (12a-b), welche zu einer Detektion von Infrarot-Strahlung vorgesehen ist, **dadurch gekennzeichnet, dass** die Sensoreinheit (12a-b) zumindest einen Messpunkt (14a-b) aufweist, welcher zu einer Einbringung in zumindest ein Gargut (16a-b) vorgesehen ist.

2. Sensorvorrichtung (10a-b) nach Anspruch 1, **dadurch gekennzeichnet, dass** die Sensoreinheit (12a-b) zumindest einen Wellenleiter (18a-b) aufweist, welcher Infrarot-Strahlung von dem Messpunkt (14a-b) in wenigstens einem Betriebszustand aus dem Gargut (16a-b) heraus transportiert.

3. Sensorvorrichtung (10a-b) nach Anspruch 2, **dadurch gekennzeichnet, dass** die Sensoreinheit (12a-b) zumindest ein wenigstens im Wesentlichen starres Einführungselement (20a-b) aufweist, innerhalb welchem der Wellenleiter (18a-b) in wenigstens einem montierten Zustand wenigstens teilweise angeordnet ist.

4. Sensorvorrichtung (10a-b) nach Anspruch 3, **dadurch gekennzeichnet, dass** das Einführungselement (20a-b) zumindest zwei Detektionsausnehmungen (22a-b, 24a-b, 26a-b) aufweist, die den Messpunkt (14a-b) und zumindest einen weiteren Messpunkt (28a-b, 30a-b) definieren.

5. Sensorvorrichtung (10a-b) nach einem der vorhergehenden Ansprüche, **gekennzeichnet durch** zumindest ein Kontaktmodul (32a-b), das zu einer abnehmbaren Anordnung an zumindest einem Gargeschirr (34a-b) vorgesehen ist.

6. Sensorvorrichtung (10a-b) nach einem der vorhergehenden Ansprüche, **gekennzeichnet durch** zumindest eine Steuereinheit (36a-b), die in wenigstens einem Betriebszustand mit der Sensoreinheit (12a-b) kommuniziert und auf Basis der von der Sensoreinheit (12a-b) detektierten Infrarot-Strahlung zumindest eine Temperatur des Garguts (16a-b) ermittelt.

7. Sensorvorrichtung (10a-b) nach den Ansprüchen 5 und 6, **dadurch gekennzeichnet, dass** die Steuereinheit (36a-b) wenigstens im Wesentlichen in dem Kontaktmodul (32a-b) integriert ist.

8. Sensorvorrichtung (10a) zumindest nach Anspruch 5, **dadurch gekennzeichnet, dass** das Kontaktmodul (32a) und die Sensoreinheit (12a) in wenigstens einem montierten Zustand wenigstens im Wesentlichen starr miteinander verbunden sind.

9. Sensorvorrichtung (10b) zumindest nach Anspruch 5, **dadurch gekennzeichnet, dass** das Kontaktmodul (32b) und die Sensoreinheit (12b) in wenigstens einem montierten Zustand durch ein wenigstens im Wesentlichen flexibles Verbindungselement (38b) der Sensoreinheit (12b) miteinander verbunden sind.

10. Gargerät mit zumindest einer Sensorvorrichtung (10a-b) nach einem der vorhergehenden Ansprüche.

11. Verfahren zur Messung zumindest einer Temperatur zumindest eines Garguts (16a-b), insbesondere mit einer Sensorvorrichtung (10a-b) nach einem der Ansprüche 1 bis 9, bei welchem Infrarot-Strahlung innerhalb des Garguts (16a-b) detektiert wird.
